# EUROPÄISCHE PATENTSCHRIFT

(11) **EP 2 517 546 B1**
(45) Veröffentlichungstag und Bekanntmachung des Hinweises auf die Patenterteilung: **26.08.2015**
(21) Anmeldenummer: 12002582.0
(22) Anmeldetag: 12.04.2012
(51) Int. Cl.: A01D 34/66

(54) **Mähmaschine**
Mowing machine
Faucheuse

(30) Priorität: 29.04.2011 DE 102011100091
(43) Veröffentlichungstag der Anmeldung: 31.10.2012
(73) Patentinhaber: Maschinenfabrik Bernard Krone GmbH, 48480 Spelle (DE)
(72) Erfinder: Afting, Andreas, 48488 Emsbüren (DE); Lömker, Jens, 48496 Hopsten (DE); Ensink, Holger, 49835 Wietmarschen (DE)

(56) Entgegenhaltungen:
- EP-A1- 0 579 564
- EP-A1- 0 787 422
- EP-A2- 0 516 939
- DE-U1- 8 912 479

## Beschreibung

Die Erfindung betrifft eine an eine Hubeinrichtung eines landwirtschaftlichen Trägerfahrzeuges ankoppelbare Mähmaschine nach dem Oberbegriff des Anspruchs 1. Derartige Maschinen sind aus der Praxis in vielfältigen Ausführungsformen bekannt und werden hauptsächlich zum Ernten von Gras oder dgl. Erntegüter verwendet. Dazu wird die Mäheinrichtung der Mähmaschine seitlich von dem landwirtschaftlichen Trägerfahrzeug über die Oberfläche der Feld- oder Wiesenfläche geführt, während für den Transport der Mähmaschine auf der Straße die Mäheinrichtung in eine Transportstellung verbracht wird, in der sich die Mäheinrichtung in im wesentlichen vertikaler Erstreckung in etwa oberhalb ihrer Trageinrichtung befindet. Zum Abstellen derartiger Mähmaschinen nach der Benutzung ist es aus der Praxis bekannt, die Mähmaschine in ihrer Arbeits- und Betriebsstellung auf dem Erdboden abzustellen, wenn diese vom landwirtschaftlichen Trägerfahrzeug abgekoppelt werden soll. In Einzelfällen kann es allerdings auch vorgesehen sein, die Mähmaschine in ihrer Transportstellung abzustellen.

Eine Abstellstütze für Scheibenmäher ist in "Profi - Magazin für professionelle Agrartechnik", Ausgabe 06/2006 - Seite 41 bekannt gemacht worden. Die Abstellstütze besteht dazu aus einem unteren Träger mit zwei Füßen und einem vertikal aufragender Stützträger, an dessen oberem Ende die Abstellstütze mittels zweier aufgeschweißter Rohrstücke in vorhandene Bohrungen der Gleitkufen eines Scheibenmähers eingehängt werden kann Der Scheibenmäher kann somit in Transportstellung auf einer Abstelleinrichtung mit drei Stützbeinen abgestellt werden, wenn der üblicherweise am Dreipunktbock der Mähmaschine vorgesehene Abstellstützfuß mitbenutzt wird. Diese Abstelleinrichtung ist allerdings mit dem Nachteil behaftet, dass die Abstellstütze häufig an dem gewünschten Abstellort nicht zur Verfügung steht, da an dem benutzten Scheibenmäher keine Möglichkeit vorgesehen ist, die Abstellstütze an irgend einer Stelle zu verstauen, damit diese auch bei der Arbeit und während des Transportes mitgeführt werden kann.

Durch die DE 89 12 479 U1 wird eine Heuwerbungsmaschine offenbart, bei der Rechkörper in einer symmetrischen Anordnung beidseitig an einem Gerätemittelteil schwenkbar angebracht sind, so dass die Rechkörper aus einer bodenparallelen Arbeitsstellung in eine vertikal ausgerichtete Transportstellung verbracht werden können. Weiterhin ist das Gerätemittelteil mit Abstellstützen versehen, welche sich in vertikaler Ausrichtung vom Gerätemittelteil zum Erdboden erstrecken. Aufgrund der symmetrisch zum Gerätemittelteil ausgerichteten Anbringung der Abstellstützen ist die vorstehend beschriebene Ausführungsform jedoch nicht dazu geeignet, eine sichere Abstellfunktion für einseitig und seitlich von einem landwirtschaftlichem Trägerfahrzeug geführte Mähmaschinen zu gewährleisten, wenn die Mäheinrichtung der Mähmaschine sich in der Transportstellung befindet.

Aus der EP 0 787 422 A1 geht eine Abstellstütze an einer Mähmaschine hervor, durch die ein in Fahrtrichtung gerichtetes Umkippen der Mähmaschine verhindert wird, wenn die Mäheinrichtung der Mähmaschine in der Arbeitsstellung auf dem Erdboden abgestellt ist. Zu diesem Zweck ist dem Maschinenrahmen der Mähmaschine eine schräg in Fahrtrichtung angestellte Abstellstütze zugeordnet, deren Abstützwirkung sich jedoch nur auf einen geringen Teil des Gewichtes der Mähmaschine auswirkt. Außerdem kann einer derartigen Abstellstütze ein sicheres Abstellen einer Mähmaschine weder unterstützen noch sicherstellen, deren Mäheinrichtung in eine platzsparende, etwa vertikale Transportstellung verbracht ist.

Aufgabe der Erfindung ist es daher, die Mängel aus dem Stand der Technik zu vermeiden und eine Abstelleinrichtung für eine Mähmaschine vorzuschlagen, mit der eine uneingeschränkte Nutzung der Mähmaschine sichergestellt ist.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche.

Erfindungsgemäß wird zur Lösung der Aufgabe eine Mähmaschine mit einer in einer Arbeits- und Betriebsstellung seitlich von einem landwirtschaftlichem Trägerfahrzeug geführten Mäheinrichtung vorgeschlagen, die eine Anzahl um jeweils eine etwa vertikale Achse rotierender Schneidorgane umfasst, sowie mit einer Trageinrichtung, an der ein ein- oder mehrteiliger Tragarm angelenkt ist, an dessen freiem Ende die Mäheinrichtung schwenkbar gehaltert ist, welche durch eine Lageveränderung des Tragarms aus einer etwa bodenparallelen, seitlich von dem Trägerfahrzeug geführten Arbeits- und Betriebsstellung in eine etwa oberhalb der Trageinrichtung befindlichen Transportstellung überführbar ist und mit einer der Trageinrichtung zugeordneten Abstelleinrichtung zum Abstellen der Mähmaschine auf einer nahezu ebenen Fläche in einem von dem Trägerfahrzeug abgekoppelten Zustand, wobei sich die Mäheinrichtung in ihrer Transportstellung befindet und die Abstelleinrichtung zumindest drei Stützfüße umfasst, wobei zumindest einer der Stützfüße, welcher der Trageinrichtung in einem in Bezug zur Fahrt- und Arbeitsrichtung rechten Endbereich der Trageinrichtung zugeordnet ist, mit einer Aufstandsfläche aus einer dicht an den Korpus der Trageinrichtung herangeführten Außerbetriebsstellung in eine weiter vom Korpus der Trageinrichtung entfernten Betriebsstellung überführbar und arretierbar ausgebildet ist und wobei zumindest einer der Stützfüße der Abstelleinrichtung mittels einer in Bezug zur Horizontalen zum Erdboden hin geneigten Schiebeführung mit ihrer Aufstandsfläche aus einer dicht an den Korpus der Trageinrichtung herangeführten Außerbetriebsstellung in eine weiter vom Korpus der Trageinrichtung entfernten Betriebsstellung überführbar sind.

Die Erfindung schlägt mithin eine Abstelleinrichtung vor, die der Mähmaschine dauerhaft zugeordnet ist, so dass jederzeit und an jedem gewünschten Ort mit dem Abstellen der Mähmaschine in der Transportstellung die Vorteile des reduzierten Platzbedarfes und des unkomplizierten Ab- und Anbaus der Mähmaschine an das landwirtschaftliche Trägerfahrzeug genutzt werden können. Zumindest einer der mindestens drei Stützfüße der Abstelleinrichtung können aufgrund ihrer Anbringung an der Trageinrichtung der Mähmaschine aus einer Außerbetriebsstellung, in der die Aufstandsfläche des zumindest einen Stützfußes aus einer dicht am Korpus der Trageinrichtung gelegenen Position in eine weiter vom Korpus der Trageinrichtung entfernten Betriebsstellung überführbar ist, verbracht werden. Dabei bildet zumindest einer der Stützfüße in ihrer Betriebsstellung eine weit vom Korpus der Trageinrichtung der Mähmaschine abstehende Kragstütze. Die Bewegungsrichtung während der Überführung des zumindest einen Stützfußes aus der Außerbetriebsstellung in die Betriebsstellung und umgekehrt liegt dabei in einem Winkelbereich, der sich zwischen -einer Ausrichtung in Fahrt- und Arbeitsrichtung und einer Ausrichtung quer zur Fahrt- und Arbeitsrichtung erstreckt. Vorteilhafterweise wird hierzu ein Winkel ausgewählt, der etwa auf der Winkelhalbierenden zwischen in und quer zur Fahrt- und Arbeitsrichtung ausgerichtet liegt. Durch die weit auskragende Betriebsstellung der nach dem Erfindungsgedanken gestalteten Stützfüße wird von diesen Stützfüßen eine Fläche aufgespannt, innerhalb der wesentliche Baugruppen der Mähmaschine wie auch der Gesamtschwerpunkt bei einer zum Erdboden gerichteten Projektion gelegen sind. Dadurch wird ein absolut sicherer Abstellvorgang der Mähmaschine in der Transportstellung der Mäheinrichtung erreicht.

Durch die Anwendung des Erfindungsgegenstandes können zahlreiche, voneinander verschiedene Ausführungsformen bzw. Anbringungsvarianten der Stützfüße an der Trageinrichtung der Mähmaschine realisiert werden. So können der Trageinrichtung in einem in Bezug zur Fahrt- und Arbeitsrichtung rechten Bereich jeweils ein Stützfuß vor-und nachgeordnet sein, während an der in Fahrt- und Arbeitsrichtung linke Seite der Trageinrichtung lediglich ein Stützfuß angebracht ist. Weiterhin kann es vorgesehen sein, dass der Trageinrichtung sowohl in dem rechten als auch in dem linken Bereich jeweils ein Stützfuß vor- und nachgeordnet ist. Eine weitere vorteilhafte Ausführungsform kann so gestaltet sein, dass die Trageinrichtung in dem in Bezug zur Fahrt- und Arbeitsrichtung rechten Endbereich einen nachgeordneten Stützfuß aufweist, während an der Vorderseite jeweils im rechten und linken Endbereich jeweils ein Stützfuß angebracht ist.

Weitere erfindungsgemäße Ausgestaltungen ergeben sich aus der Art und Weise der Überführung des oder der Stützfüße aus der Außerbetriebstellung in die weit auskragende Betriebsstellung. Denkbar ist es dabei, dass der oder die Stützfüße schwenkbar an der Trageinrichtung angelenkt sind und somit durch eine Schwenkbewegung um eine quer zur Fahrt- und Arbeitsrichtung ausgerichtete Achse zwischen der dicht an den Korpus der Trageinrichtung herangeführten Außerbetriebsstellung und der weiter vom Korpus der Trageinrichtung entfernten Betriebsstellung verschwenkt werden können. Weiterhin ist diese Überführung auch dadurch erreichbar, dass der oder die Stützfüße in Schiebeführungen gehaltert sind, die an der Trageinrichtung der Mähmaschine in einer in Bezug zur Horizontalen zum Erdboden hin geneigten Ausrichtung angebracht sind. Unabhängig von der Art und Weise der Überführung des oder der Stützfüße ist es bei beiden Ausführungsformen vorgesehen, dass der oder die Stützfüße sowohl in der Außerbetriebsstellung als auch in der Betriebsstellung arretierbar sind.

Die Erfindung soll nun anhand eines Ausführungsbeispiels näher erläutert werden:

In der Zeichnung zeigt:
- **Fig.1:**: eine perspektivische, teilweise abgebrochen dargestellte Ansicht auf eine erfindungsgemäße Mähmaschine in einer in Fahrt- und Arbeitsrichtung weisenden Blickrichtung;
- **Fig.2:**: eine teilweise abgebrochen dargestellte Vorderansicht der Mähmaschine nach Fig. 1 in einer der Fahrt- und Arbeitsrichtung entgegen gesetzten Blickrichtung;
- **Fig.3:**: eine teilweise abgebrochen dargestellte Seitenansicht der Mähmaschine nach Fig.1;

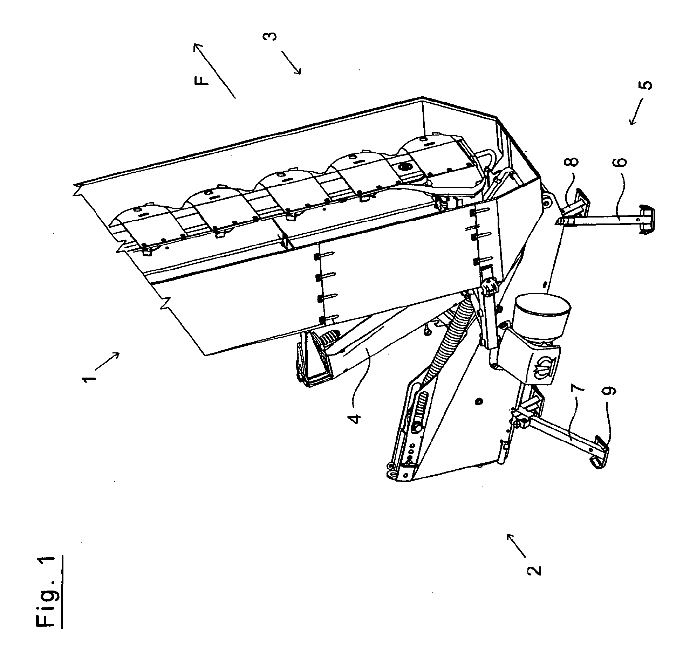

Ein Ausführungsbeispiel einer erfindungsgemäßen Mähmaschine 1 ist in den Fig. 1 näher veranschaulicht und umfasst eine Trageinrichtung 2 zur Ankoppelung der Mähmaschine 1 an ein nicht dargestelltes landwirtschaftliches Trägerfahrzeuges,beispielsweise in der Art eines landwirtschaftlichen Traktors, wobei in dem in Bezug zur Fahrt- und Arbeitsrichtung F der Mähmaschine 1 rechten Endbereich der Trageinrichtung 2 an dieser schwenkbar ein Tragarm 4 zur schwenkbaren Halterung der Mäheinrichtung 3 angelenkt ist. Die Mäheinrichtung 3 befindet sich in dieser Darstellung in ihrer Transportstellung in einer im Wesentlichen vertikalen Erstreckung in etwa oberhalb der Trageinrichtung 2. In der Arbeits- und Betriebsstellung ist die Mäheinrichtung 3 durch eine Lageveränderung des schwenkbeweglichen Tragarmes 4 aus der im Wesentlichen vertikalen Erstreckung in eine bodenparallele, seitlich von dem landwirtschaftlichen Trägerfahrzeug geführten Position überführbar und kann dann zum Ernten von Gras oder dgl. Erntegüter gleitend über die Oberfläche einer Feld- oder Wiesenfläche bewegt werden, wobei um eine etwa vertikale Achse rotierende Schneidorgane der Mäheinrichtung 3 für das Abmähen des Erntegutes vorgesehen sind.

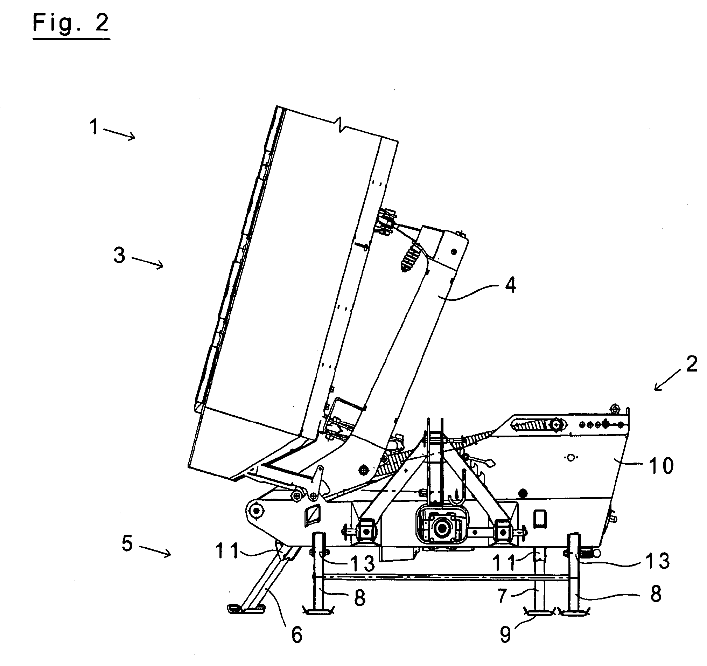

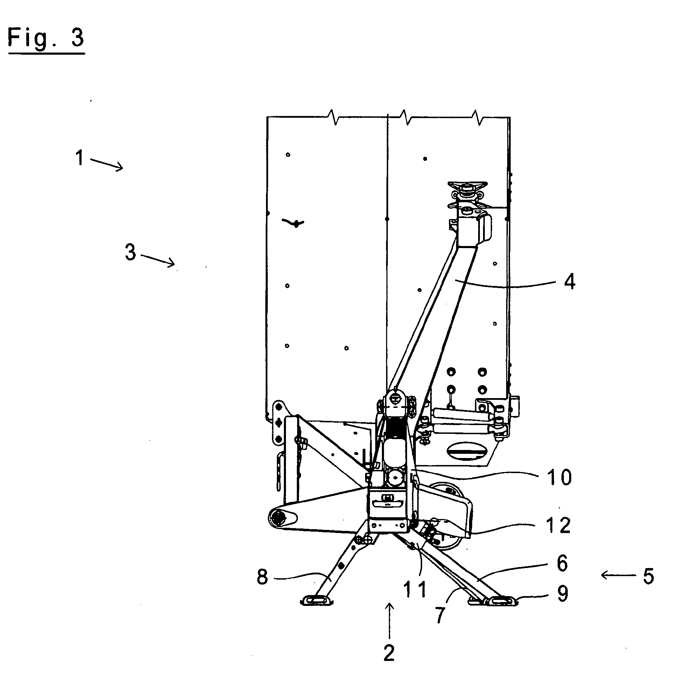

Wie insbesondere den Figuren 2 und 3 zu entnehmen ist, weist die Mähmaschine 1 eine Abstelleinrichtung 5 auf, die aus zumindest drei Stützfüßen 6,7,8 besteht, wobei sich die Stützfüße 6,7,8 in der weiter vom Korpus der Trageinrichtung 2 entfernten Betriebsstellung befinden. Deutlich sichtbar bieten die Stützfüße 6,7,8 in dieser weit auskragenden Betriebsstellung eine optimale Standfestigkeit der gesamten Mähmaschine 1 mit ihrer sich in der Transportstellung befindlichen Mäheinrichtung 3. Die Bewegungsrichtung während der Überführung des zumindest einen Stützfußes 6,7,8 aus der Außerbetriebsstellung in die Betriebsstellung und umgekehrt bzw. die Anbringungsrichtung der Stützfüße 6,7,8 in Bezug zur Trageinrichtung 2 liegt dabei in einem Winkelbereich, der sich zwischen einer Ausrichtung in Fahrt- und Arbeitsrichtung und einer Ausrichtung quer zur Fahrt- und Arbeitsrichtung erstreckt. Vorteilhafterweise wird hierzu ein Winkel ausgewählt, der etwa auf der Winkelhalbierenden zwischen in und quer zur Fahrt- und Arbeitsrichtung ausgerichtet liegt. Während der Arbeit auf dem Feld und beim Transport auf der Straße können die Stützfüße 6,7,8 aus ihrer weiter vom Korpus der Trageinrichtung 2 entfernten Betriebsstellung mit ihren Aufstandsflächen 9 in eine dicht an den Korpus der Trageinrichtung 2 herangeführte Außerbetriebsstellung überführt und dort arretiert werden. Für die Stützfüße 6,7 weist die als kastenförmigen Hohlträger 10 ausgeführte Trageinrichtung 2 Schiebeführungen 11 auf, in denen die vierkantrohrförmigen Stützen der Stützfüße 6,7 eingeführt sind. Mittels Verriegelungen 12 können die Stützfüße 6,7 sowohl in ihrer Außerbetriebsstellung als auch in ihrer Betriebsstellung arretiert werden. An ihrer in Bezug zur Fahrt- und Arbeitsrichtung F gesehen vorderen Seite ist die Trageinrichtung 2 ebenfalls mit zwei Stützfüßen 8 ausgerüstet, welche um eine quer zur Fahrt- und Arbeitsrichtung F ausgerichtete Achse 13 schwenkbar aus einer mit ihren Aufstandsflächen 9 weiter vom Korpus der Trageinrichtung 2 entfernten Betriebsstellung (Fig. 3) in eine dicht an den Korpus der Trageinrichtung 2 herangeführte Außerbetriebsstellung verbracht werden. Dazu können die Stützfüße 8 um die Achse 13 verschwenkt werden, so dass sich dann die Aufstandsflächen 9 der Stützfüße 8 unmittelbar unter dem kastenförmigen Hohlträger 10 der Trageinrichtung 2 befinden.

Obwohl in dem veranschaulichten Ausführungsbeispiel eine vorteilhafte Gestaltung der Mähmaschine wiedergegeben wurde, so sind im Rahmen der Erfindung durchaus weitere vorteilhafte Modifikationen denkbar. So ist es ebenso vorstellbar, dass an der vorderen Seite der Trageinrichtung 2 lediglich ein Stützfuß 8 angeordnet ist, so dass die Abstelleinrichtung 5 mit nur drei Stützfüßen 6,7,8 eine ebenso gute Standsicherheit aufweist.

## Patentansprüche

1. Mähmaschine mit einer in einer Arbeits- und Betriebsstellung seitlich von einem landwirtschaftlichem Trägerfahrzeug geführten Mäheinrichtung (3), die eine Anzahl um jeweils eine etwa vertikale Achse rotierender Schneidorgane umfasst, sowie mit einer Trageinrichtung (2), an der ein ein- oder mehrteiliger Tragarm (4) angelenkt ist, an dessen freiem Ende die Mäheinrichtung (3) schwenkbar gehaltert ist, welche durch eine Lageveränderung des Tragarms (4) aus einer etwa bodenparallelen, seitlich von dem Trägerfahrzeug geführten Arbeits- und Betriebsstellung in eine etwa oberhalb der Trageinrichtung (2) befindlichen Transportstellung überführbar ist und mit einer der Trageinrichtung (2) zugeordneten Abstelleinrichtung zum Abstellen der Mähmaschine (1) auf einer nahezu ebenen Fläche in einem von dem Trägerfahrzeug abgekoppelten Zustand, wobei sich die Mäheinrichtung (3) in ihrer Transportstellung befindet, **dadurch gekennzeichnet, dass** die Abstelleinrichtung (5) zumindest drei Stützfüße (6,7,8) umfasst, wobei zumindest einer der Stützfüße (6,7,8), welcher der Trageinrichtung (2) in einem in Bezug zur Fahrt- und Arbeitsrichtung (F) rechten Endbereich der Trageinrichtung (2) zugeordnet ist, mit einer Aufstandsfläche (9) aus einer dicht an den Korpus der Trageinrichtung (2) herangeführten Außerbetriebsstellung in eine weiter vom Korpus der Trageinrichtung (2) entfernten Betriebsstellung überführbar und arretierbar ausgebildet ist und wobei zumindest einer der Stützfüße (6,7,8) der Abstelleinrichtung (5) mittels einer in Bezug zur Horizontalen zum Erdboden hin geneigten Schiebeführung (11) mit ihrer Aufstandsfläche (9) aus einer dicht an den Korpus der Trageinrichtung (2) herangeführten Außerbetriebsstellung in eine weiter vom Korpus der Trageinrichtung (2) entfernten Betriebsstellung überführbar sind.

2. Mähmaschine nach Anspruch 1, **dadurch gekennzeichnet, dass** zumindest einer der Stützfüße (6,7,8) mit seiner Aufstandsfläche (9) aus einer dicht an den Korpus der Trageinrichtung (2) herangeführten Außerbetriebsstellung in eine weiter vom Korpus der Trageinrichtung (2) entfernten Betriebsstellung überführbar ist, wobei die Bewegungsrichtung des zumindest einen Stützfußes (6,7,8) in einem Winkelbereich ausgerichtet ist, der sich zwischen in Fahrt- und Arbeitsrichtung (F) gerichtet und quer zur Fahrt- und Arbeitsrichtung (F) erstreckt.

3. Mähmaschine nach Anspruch 1, **dadurch gekennzeichnet, dass** der Trageinrichtung (2) in dem in Bezug zur Fahrt- und Arbeitsrichtung (F) rechten Endbereich zumindest zwei Stützfüße (6,8) zugeordnet sind.

4. Mähmaschine nach Anspruch 1 oder 2, **dadurch gekennzeichnet, dass** der Trageinrichtung (2) in dem in Bezug zur Fahrt- und Arbeitsrichtung (F) rechten Endbereich zumindest zwei Stützfüße (6,8) zugeordnet sind, welche jeweils mit ihrer Aufstandsfläche (9) aus einer dicht an den Korpus der Trageinrichtung (2) herangeführten Außerbetriebsstellung in eine weiter vom Korpus der Trageinrichtung (2) entfernten Betriebsstellung überführbar sind.

5. Mähmaschine nach Anspruch 3 und 4, **dadurch gekennzeichnet, dass** die Stützfüße (6,8) der Trageinrichtung (2) in dem in Bezug zur Fahrt- und Arbeitsrichtung (F) rechten Endbereich der Trageinrichtung vor- und nachgeordnet sind.

6. Mähmaschine nach Anspruch 1, **dadurch gekennzeichnet, dass** die Abstelleinrichtung (5) zwei Stützfüße (8) aufweist, welche der Trageinrichtung (2) in Bezug zur Fahrt- und Arbeitsrichtung (F) an der Vorderseite jeweils in einem rechten und linken Endbereich zugeordnet sind.

7. Mähmaschine nach Anspruch 1, **dadurch gekennzeichnet, dass** die Abstelleinrichtung (5) zwei Stützfüße (6,7) aufweist, welche an der in Bezug zur Fahrt- und Arbeitsrichtung (F) gelegenen Hinterseite der Trageinrichtung (2) jeweils in einem rechten und linken Endbereich anbringbar sind.

8. Mähmaschine nach zumindest einem der Ansprüche 1 bis 6, **dadurch gekennzeichnet, dass** die Stützfüße (8) der Abstelleinrichtung (5) schwenkbar mit ihrer Aufstandsfläche (9) aus einer dicht an den Korpus der Trageinrichtung () herangeführten Außerbetriebsstellung in eine weiter vom Korpus der Trageinrichtung (2) entfernten Betriebsstellung überführbar sind.

9. Mähmaschine nach zumindest einem der Ansprüche 1 bis 8, **dadurch gekennzeichnet, dass** die Trageinrichtung (2) etwa die Form eines kastenförmigen Hohlträger (10) aufweist, in dessen Innenraum die Schiebeführungen (11) untergebracht sind.

## Claims

1. Mower comprising a mowing device (3) which is guided at the side of an agricultural carrier vehicle when in a working and operating position and comprises a plurality of cutting elements, each of which rotates about an almost vertical axis, and comprising a supporting device (2) to which a single- or multi-part supporting arm (4) is articulated, on the free end of which the mowing device (3) is pivotally retained, which mowing device can be moved as a result of the supporting arm (4) changing position from a working and operating position, which is almost parallel to the ground and is guided at the side of the carrier vehicle, into a transport position which is located approximately above the supporting device (2), and comprising a parking device which is assigned to the supporting device (2) and is intended to park the mower (1) on an almost even surface when it is uncoupled from the carrier vehicle, the mowing device (3) being in its transport position, **characterised in that** the parking device (5) has at least three supporting feet (6, 7, 8), a contact surface (9) of at least one of the supporting feet (6, 7, 8) assigned to the supporting device (2) in a right-hand end region, with regard to the travelling and working direction (F), of the supporting device (2), being designed to be movable from an inoperative position, which is close to the body of the supporting device (2), into an operative position, which is further away from the body of the supporting device (2), and to be lockable therein, and the contact surface (9) of at least one of the supporting feet (6, 7, 8) of the parking device (5) being movable from an inoperative position, which is close to the body of the supporting device (2), into an operative position, which is further away from the body of the supporting device (2), by means of a sliding guide (11) which is inclined towards the ground in relation to the horizontal.

2. Mower according to claim 1, **characterised in that** the contact surface (9) of at least one of the supporting feet (6, 7, 8) can be moved from an inoperative position which is close to the body of the supporting device (2) into an operative position which is further away from the body of the supporting device (2), the direction of movement of the at least one supporting foot (6, 7, 8) being oriented in an angular range which is directed between in the travelling and working direction (F) and extends transversely to the travelling and working direction (F).

3. Mower according to claim 1, **characterised in that** at least two supporting feet (6, 8) are assigned to the right-hand end region, in relation to the travelling and working direction (F), of the supporting device (2).

4. Mower according to either claim 1 or claim 2, **characterised in that** the contact surface (9) of at least two supporting feet (6, 8) assigned to the right-hand end region, in relation to the travelling and working direction (F), of the supporting device (2) can be moved in each case from an inoperative position which is close to the body of the supporting device (2) into an operative position which is further away from the body of the supporting device (2).

5. Mower according to claims 3 and 4, **characterised in that** the supporting feet (6, 8) of the supporting device (2) are arranged upstream and downstream of the supporting device in the right-hand end region, in relation to the travelling and working direction (F), of the supporting device.

6. Mower according to claim 1, **characterised in that** the parking device (5) has two supporting feet (8) which are assigned to the front of the supporting device (2), in relation to the travelling and working direction (F), in a right-hand and left-hand end region, respectively.

7. Mower according to claim 1, **characterised in that** the parking device (5) has two supporting feet (6, 7) which can be attached to the rear of the supporting device (2), in relation to the travelling and working direction (F), in a right-hand and left-hand end region, respectively.

8. Mower according to at least one of claims 1 to 6, **characterised in that** the contact surface (9) of the supporting feet (8) of the parking device (5) can be pivoted from an inoperative position which is close to the body of the supporting device, into an operative position which is further away from the body of the supporting device (2).

9. Mower according to at least one of claims 1 to 8, **characterised in that** the supporting device (2) has the general form of a box-shaped hollow girder (10), in the inner space of which the sliding guides (11) are accommodated.

## Revendications

1. Faucheuse comprenant un dispositif faucheur (3) porté latéralement par un véhicule porteur agricole dans une position de travail et de fonctionnement, et qui comporte une série d'organes de coupe respectivement mobiles en rotation autour d'un axe essentiellement vertical et un dispositif porteur (2) sur lequel est articulé un bras porteur (4) en une ou en plusieurs parties à l'extrémité libre duquel est monté pivotant le dispositif faucheur (3) qui peut être transféré suite à une modification de position du bras porteur (4) d'une position de travail et de fonctionnement dans laquelle il est situé essentiellement parallèlement au sol et latéralement au véhicule porteur dans une position de transport dans laquelle il est situé essentiellement au-dessus du dispositif porteur (2), ainsi qu'un dispositif d'arrêt associé au dispositif porteur (2) pour permettre de positionner la faucheur (1) sur une surface essentiellement plane dans un état désaccouplé du véhicule porteur, le dispositif faucheur (3) se trouvant dans sa position de transport,
**caractérisé en ce que**
le dispositif d'arrêt (5) comporte au moins trois pieds support (6, 7, 8), et au moins l'un de ces pieds support (6, 7, 8) qui est associé au dispositif porteur (2) dans la zone d'extrémité droite de ce dispositif porteur (2) par rapport à la direction de déplacement et de travail (F) et est équipé d'une surface d'appui sur le sol (9) peut être transféré et bloqué d'une position de non fonctionnement dans laquelle il est situé à proximité immédiate du corps du dispositif porteur (2) dans une position de travail dans laquelle il est plus éloigné du corps du dispositif porteur (2), et au moins l'un des pieds support (6, 7, 8) du dispositif d'arrêt (5) peut être transféré avec sa surface d'appui sur le sol (9) au moyen d'un guide coulissant (11) incliné par rapport à l'horizontale vers le sol, d'une position de non fonctionnement dans laquelle est situé à proximité immédiate le corps du dispositif porteur (2) dans une position de travail dans laquelle il est plus éloigné du corps du dispositif porteur (2).

2. Faucheuse conforme à la revendication 1,
**caractérisée en ce qu'**
au moins l'un des pieds support (6, 7, 8) peut être transféré avec sa surface d'appui sur le sol (9) d'une position de non fonctionnement dans laquelle est située à proximité immédiate du corps du dispositif porteur (2) dans une position de travail dans laquelle il est plus éloigné du corps du dispositif porteur (2), la direction de déplacement de ce pied d'appui (6, 7, 8) étant orientée dans une zone angulaire qui s'étend entre la direction de déplacement et de travail (F) et la direction transversale à la direction de déplacement et de travail (F).

3. Faucheuse conforme à la revendication 1,
**caractérisée en ce qu'**
au moins deux pieds support (6, 8) sont associés au dispositif porteur (2) dans la zone d'extrémité droite par rapport à la direction de déplacement et de travail (F).

4. Faucheuse conforme à la revendication 1 ou 2,
**caractérisée en ce qu'**
au dispositif porteur (2), dans la zone d'extrémité droite par rapport à la direction de déplacement et de travail (F) sont associés au moins deux pieds support (6, 8) qui peuvent être respectivement transférés avec leur surface d'appui sur le sol (9) d'une position de non fonctionnement dans laquelle ils sont situés à proximité immédiate du corps du dispositif porteur (2) dans une position de travail dans laquelle ils sont plus éloignés du corps du dispositif porteur (2).

5. Faucheuse conforme à la revendication 3 ou 4,
**caractérisée en ce que**
les pieds support (6, 8) du dispositif porteur (2) sont montés en avant et en arrière du dispositif porteur (2) dans la zone d'extrémité droite de ce dispositif porteur par rapport à la direction de déplacement et de travail (F).

6. Faucheuse conforme à la revendication 1,
**caractérisée en ce que**
le dispositif d'arrêt (5) comprend deux pieds support (8) qui sont respectivement montés du côté avant du dispositif porteur (2) dans la zone d'extrémité droite et dans la zone d'extrémité gauche par rapport à la direction de déplacement et de travail (F).

7. Faucheuse conforme à la revendication 1,
**caractérisée en ce que**
le dispositif d'arrêt (5) comprend deux pieds support (6, 7) pouvant être respectivement positionnés du côté arrière du dispositif porteur (2) dans la zone d'extrémité droite et dans la zone d'extrémité gauche par rapport à la direction de déplacement et de travail (F).

8. Faucheuse conforme à au moins l'une des revendications 1 à 6,
**caractérisée en ce que**
les pieds support (8) du dispositif d'arrêt (5) peuvent être transférés par pivotement avec leur surface d'appui sur le sol (9) d'une position de non fonctionnement dans laquelle ils sont situés à proximité immédiate du corps du dispositif porteur (2) dans une position de travail dans laquelle ils sont plus éloignés du corps du dispositif porteur.

9. Faucheuse conforme à au moins l'une des revendications 1 à 8,
**caractérisée en ce que**
le dispositif porteur (2) présente essentiellement la forme d'un support creux (10) en forme de caisson dans le volume interne duquel sont montés les guidages de coulissement (11).
